# EUROPEAN PATENT APPLICATION

(11) **EP 1 471 705 A1**
(43) Date of publication of application: **27.10.2004**
(21) Application number: 01986393.5
(22) Date of filing: 30.12.2001
(51) Int. Cl.: H04L 29/02

(54) **A MEANS AND CONTROL METHOD FOR ADAPTING DIFFERENT MEDIA OF TRANSMISSION LINK OF NETWORK ON PHYSICAL LAYER.**

(71) Applicant: Legend (Beijing) Limited, Haidan District, Beijing 100085 (CN)
(72) Inventor: LI, Jun, Haidian District, Beijing 100085 (CN); ZHANG, Hongwei, Haidian District, Beijing 100085 (CN); YANG, Lipiang, Heidian District, Beijing 100085 (CN)
(74) Representative: Reinhard - Skuhra - Weise & Partner GbR
(86) International application number: PCT/CN2001/001652
(87) International publication number: WO 2003/056775

(57) **Abstract**

This invention discloses an apparatus for adaptively switching different network transmission link media on physical layer. The apparatus comprises at least one common interface for connecting a medium access control (MAC) module interface; one or more different transmission medium interface; and a switch and control means, which servers as a part of a physical coding sub-layer, for controlling an automatic switching among different transmission media. The physical coding sublayer performs one and more FIFO synchronization for connecting different transmission media, encodes symbols and switches among paths of different transmission media. It further comprises a detection control means for detecting status information of the interface, enabling said switch and control means based on the detected information, and supplying the output to the management interface in the switch and control means. The invention can be applied into the fields of the wideband computer network and data communication, which can provide network users with convenience to select flexibly the type of the network medium as desired, to smoothly upgrade the network bandwidth and medium type, and ensure the security of key links in the network.

## Description

### BACKGROUND OF THE INVENTION

### Field of the Invention

The present invention relates to a network intelligent linking device, and more particularly, to a network intelligent linking device which is capable of adaptively switching different network transmission link media on physical layer, and to a method of controlling the same.

### Description of the Prior Art

As well known, more and more demands are proposed on the bandwidth of network transmission and media as the development in broadband networks and the data communication field. Presently, however, there is no uniform transmission bandwidth and media which can connect all network devices and terminal network nodes together. For example, in the field of Ethernet, several link bandwidths such as 10M full duplex, 10M half duplex, 100M full duplex, 100M half duplex, 1000M full duplex, 1000M half duplex exist. As for network media, there are not only non-shielding twisted wire such as UTP-5 and UTP-3 and the likes, but also optical fiber medium such as single mode fiber and multiple mode optical fiber. Network devices and network interface card are thus produced for adapting to various bandwidths and transmission media.

In prior art, in order to utilize the network bandwidth at the maximum, a user has to take account of the problem on interface and equalization between different bandwidths and transmission media. More inconveniently, when the user desires to upgrade the capacity of a network, if it is required to upgrade from one type of transmission medium to another type of transmission medium, for example, to upgrade from a twisted wire UTP-5 to multiple mode fiber, in addition to laying down of essential media (medium), hardware devices such as network devices and interface cards have to be updated once more. Further, the change of the hardware and configuration would cause an update and upgrade of related network management software and configuration. Currently, with the fast development of the broadband network, it would lead to the waste of the investment of network infrastructure and labors on the basis of prior art.

The reason that causes the above problems is in that the incompatibility between different transmission media. An electric signal for a twisted wire UTP can not be transmitted over an optical fiber. Similarly, an optical signal for an optical fiber can not be transmitted over a twisted pair. Furthermore, the definitions for user device interfaces are different. It is therefore impossible to achieve a unification of different media on the user physical interfaces.

### SUMMARY OF THE INVENTION

It is an object of the present invention to provide an apparatus for adaptively switching different network transmission link media on physical layer and a method of controlling the same, which can conveniently achieve the switching among the transmission link media for different network, avoid the inconvenience in the network upgrade to expand the capacity, and also save the investment of network infrastructure.

It is another object of the present invention to provide an apparatus for adaptively switching different network transmission link media on physical layer and a method of controlling the same, which can achieve a smoothly online switching among different transmission media for network link transparently to the user and high level software, and the loss of the flow can be reduced.

It is yet another object of the present invention to provide an apparatus for adaptively switching different network transmission link media on physical layer and a method of controlling the same, which can achieve redundancy backup of different transmission media for the devices connected to the link in real-time, and improve the reliability of the network operation from the viewpoint of the transmission media.

Accordingly, the present invention provides the following technical solutions to achieve the above objects:

An apparatus for adaptively switching different network transmission link media on physical layer comprises at least a common interface for connecting a media access control (MAC) module interface; one or more different transmission media interfaces; a switch and control means having a switch and an instruction and channel control means, which servers as a part of a physical coding sub-layer, for controlling an automatic switching among different transmission medium paths.

Preferably, the switch and control means comprises a multiplex switch for switching to different transmission media; a register for performing the set status control instruction; a first-in first-out (FIFO) synchronizing module; a plurality of symbol encoders and a plurality of decoders for encoding and decoding the symbols according to the standards for different transmission media respectively, and constructing a physical medium dependent module (PMD) for performing level drive, digital filter and digital/analog conversion; a plurality of code stream serialization means and a plurality of parallelization means; a plurality of channel encoding means and a plurality of decoding means for converting a signal into a proper form respectively; physical medium adapting (PMA) means formed by transmitting means for various media for performing signal serial/parallel conversion, code group alignment, code stream scrambling and channel coding and decoding. Above described components are connected in the order as they are mentioned. Said different transmission media are copper twist wire medium and optical fiber medium.

Preferably, the physical medium is one of 10BASE-T copper twisted wire, 100BASE-T copper twisted wire and 1000BASE-T copper twisted wire.

Preferably, the switch and control means further comprises a management interface for managing the operations of a control multiplex switch and a register FIFO module. The common interface is one of the standard gigabit media independent interface (GMII), reduced standard gigabit media independent interface (RGMII), standard reduced media independent interface (RMII), standard serial media independent interface (SMII) and standard source synchronizing serial media independent interface (S3MII).

The optical fiber medium transmission path externally connects with a gigabit interface converter (GBIC) for performing functions such as level drive, medium signal photoelectric conversion, echo suppression, cross-talk suppression and signal equalization and the likes.

The invention further comprises a detection control means for detecting a status information of the interface, switching the transmission media and controlling the data flow according to the detected information, and supplying the output to the management interface of the switch and control means. More specifically, the detection control means functions as a upper layer management controller, which includes a level converter, a latch, a register and a CPU, and is used to control a smooth switching between different media. The output of the CPU controls the management interface of the switch and control means. A multiplex switch for selecting event triggering sources is connected between the CPU and the register, which determines whether the event triggering mode of the media switching is a common purpose input-output mode or a interrupt-request mode. The event trigger notifies the CPU or the upper layer control module to set registers corresponding to the fiber and copper line medium interface for switching means respectively so as to control the path switching for the optical fiber and copper twist wire.

The link status information can be obtained from the gigabit interface converter or from the transmitting module for transmission media, or transmits the information of both to CPU via the level converter, the latch and the register.

A method of controlling the apparatus for adaptively switching transmission link media for different networks on physical layer, comprising the steps of: a CPU in the detection control means according to previous claims detects the data status of different transmission medium link; if a switching is needed, the CPU notifies a switch and control means to select the transmission medium and control the data flow based on the detected data status information.

Said medium selection is for setting the internal control and status register and/or MII management register corresponding to the fiber and copper twist wire interface respectively in the switch and control means so as to switch the paths of the fiber and the copper twist wire.

In order to temporarily store the data which is failed to transmit timely during the media path switching in the set register, said flow control sets the port flow register in the medium access control module, or sets the port register in the switch and control means. Further, it may directly transmit a pause frame to the upper level port connected therewith to request the interface to stop or delay the transmission of the data, so as to prevent the data packets from loss, thereby reducing the loss of the data flow.

Furthermore, the flow control may operate the internal timing of the register to allow the data in the register to be transmitted as desired.

The flow control sets the port flow control register in the medium access control module and the port register in the switch and control means, so as to temporarily store the data which is failed to transmit timely during switching the medium path in the set registers.

Furthermore, in order to prevent the data packets from losing, the flow control may directly transmit pause frames to the upper level port connected therewith to request the interface to stop or delay the transmission of the data so that the loss of the data flow can be reduced.

The flow control may operate the internal timing of in the register to allow the data in the register to be transmitted as desired so that the transmission rate capacity for different media can be adjusted.

The apparatus according to the present invention can be provided between a PC and at least one switch, wherein the common interface is connected to a PC and the interface path for different media is connected to the at least one switch. Also, the apparatus according to the invention can be provided between switches, or provided between a server and a switch, wherein the common interface is connected to the server, and the interface path for different media is connected to the switch. Moreover, the apparatus according to the invention can also be applied between a switch and a router.

Further, the apparatus of the invention can be separately provided, or provided in a machine such as a switch.

According to the above technical solutions, the invention has the advantages as follows:

The invention can achieve the automatic switching or controlled switching between different network transmission media, without upgrading the hardware and software of the network devices and interface cards in which the apparatus of the invention is integrated. Therefore, the investment of network infrastructure can be saved and a smooth upgrade for the network can be realized.

The invention achieve a transparently full automatic switching between different media, which enables the network system to automatically switching to a reliable backup link immediately so as to continuously perform the transmission over the network when a certain link is disconnected. Therefore, the invention plays a critical role in improving the reliability of the network operation.

Actually, it is not necessary for the user to care about the types of network physical medium because the present invention is capable of fully automatically recognizing a secure and reliable network medium type. This process is fully transparent to all the terminal users. Therefore, the apparatus and method according to the present invention is widely applied into the networking requiring high bandwidth and high reliability.

### BRIEF DESCRIPTION OF THE DRAWINGS

The above and other features and advantages of the present invention will become more apparent by describing in detail exemplary embodiments thereof with reference to the attached drawings in which:
Figure 1 is a schematic diagram illustrating a hierarchical relationship with regard to respective sublayers in OSI model;
Figure 2 is a block diagram illustrating the configuration of an adaptively switching system for different network transmission link media on physical layer according to an embodiment of the present invention.
Figure 3 is a diagram illustrating the configuration of internal modules in the switch and control device according to the embodiment of the present invention.
Figure 4 is a block diagram illustrating the configuration of a detection control device according to the embodiment of the present invention;
Figure 5 is a flow chart illustrating the control process according to an embodiment of the present invention;
Figure 6 is a flow chart illustrating a switching process of link media according to the embodiment of the present invention;
Figure 7 is a flow chart illustrating a resource processing of post-processing system of the invention;
Figure 8 is a diagram illustrating a system configuration which the switch apparatus of the invention is applied to a local area network (LAN);
Figure 9 is a diagram illustrating a system configuration which the switch apparatus of the invention is applied to a wide area network (WAN).

### DETAILED DESCRIPTION OF THE INVENTION

The invention will now be described in detail in connection with the figures and particular embodiments.

By detecting network link automatically, the present invention recognizes whether the currently linked medium is an optical fiber type or an UTP-5 type. As for different types of medium, different link establishment and operation are performed. The detection for a link signal is performed commonly by means of hardware and software. After recognizing the link status and the type of the medium, if a switching for different media occurs, or the link status is changed, a background device is activated to monitor the task and controls the flow over the link. Specifically, the background device carries out corresponding operations on the link control layer, the medium access control layer and related registers and storing device to fully automatically switch the physical links. The data loss due to the link switch can be minimized by a reliable flow control mechanism.

Since there are a large amount of difference in hardware infrastructure of the link switching device between optical fiber and UTP-5 twisted wire, the hardware is designed such that the path is reserved for the fiber and copper line on PMA sub-layer and the physical link below it to realize adaptive switching between different link media. The link switching apparatus and the MAC sub-layer are connected with one common interface such as GMII interface standard and the likes. In addition, the hardware is designed such that the establishment of the link and the change of the connection status can be detected accurately. A control register is provided to control the selection and switch of the media.

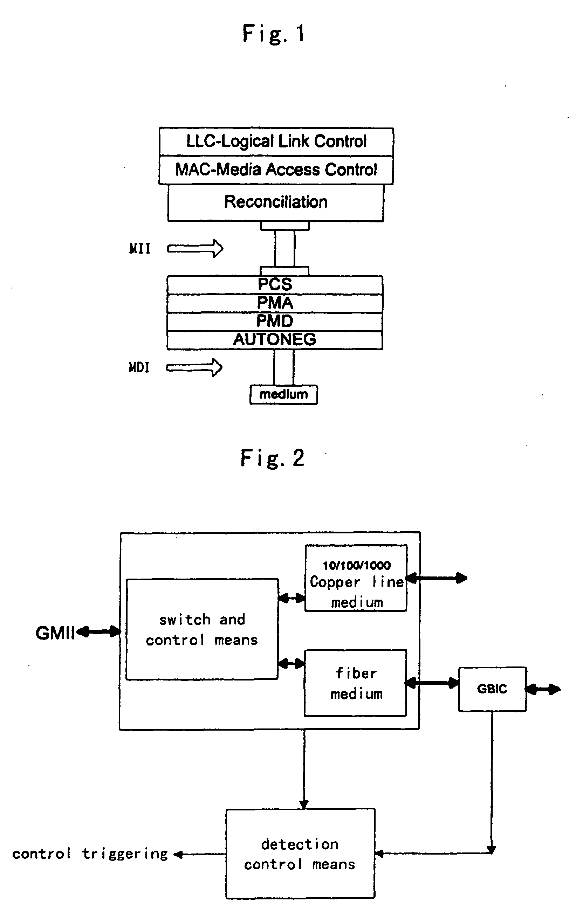

Figure 2 shows the configuration of the apparatus for adaptively switching different network transmission link media on physical layer according to the present invention. Referring to figure 2, the apparatus comprises at least a common interface, one or more interface paths, a switch and control device including a controlled multiplex switch and a control register, and a detection control device. The common interface connects the medium access control (MAC) module interface. The interface paths connect different transmission media respectively. The controlled multiplex switch may switch the signal path for different media having different transmission rate. The control register controls the multiplex switch to perform the selection and the switch for the media. In addition, the apparatus of the invention also comprises flow control registers corresponding to respective ports for controlling the signal flow, link status registers corresponding to respective ports, a connection speed register, and a full duplex/half duplex register which are not shown. The first-in first-out (FIFO) queues corresponding to respective medium paths are used to buffer the transmission flow.

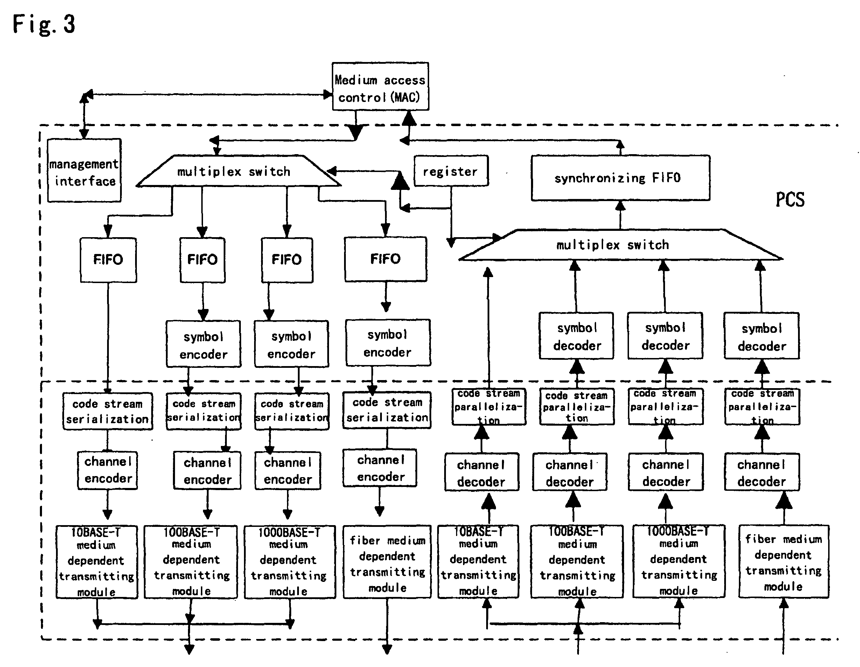

Figure 3 shows the configuration of internal modules in the switching apparatus according to the embodiment of the present invention. As shown in figure 3, the apparatus include a plurality of symbol encoders for encoding symbols from the FIFO units and a plurality of symbol decoders for decoding symbols from the code stream parallelization modules based on different media transmission standards respectively. Code stream serialization modules convert the parallel codes into the serial codes. Code stream parallelization modules convert the serial codes into parallel codes. Channel encoders encode the converted serial code stream into a signal format which is suitable for transmitting on the media.

Channel decoders process the code stream to form data which is suitable for serial-to-parallel conversion and decode the processed data. Physical medium-dependent modules corresponding to respective media perform signal level transition and driving, echo suppression, cross-talk suppression, adaptive digital filtering and equalization, digital-analog conversion and driving and the like.

As shown in Figures 2 and 3, the physical coding sub-layer (PCS) includes multiplex switches, FIFO queue, symbol encoders and symbol decoders and the likes. The common interface is a standard gigabit media independent interface (GMGI) or a reduced standard gigabit media independent interface (RGMGI). The transmission media may be twisted wire and optical fiber. The switch and control device is provided with physical medium adapting (PMA) module and physical medium dependent (PMD) module. The interface of optical fiber is externally connected to a gigabit interface converter (GBIC). As shown in figure 3, the PCS performs functions such as symbol encoding and FIFO synchronizing, the PMA performs functions such as serial-parallel converting signals, aligning code group, scrambling code stream, encoding and decoding channels, and the PMD performs functions such as level driving, digital filtering and digital-analog conversion. The GBIC serves the functions of photoelectric conversion and encoding and driving the fiber channels in addition to functions as PMD.

It should note that the switch and control device also include a management interface module which can communicate with control chips in upper layers. The chip in MAC layer can read and set the registers in the device through the management interface, thereby achieving the function of automatically controlling the medium switching. A MII management interface complying with MII IEEE 802.3u Specification may be used. The interface is formed by MDC (Management Data Clock) and MDIO (Management Data Input and Output), wherein the MDC is a clock of 0-12.5MHz supplied from the MAC module to the PHY module. The MDIO uses the MDC as a synchronization clock to provide a bi-directional data transmission between the MAC and the PHY. The status and control information can be exchanged between the MAC module and the PHY module through the MDC and the MDIO. In the process of switching media, a central processing unit (CPU) or a micro-control unit (MCU) can control the access to the control register in the switching device through the MII management interface of the MAC module.

Figure 1 illustrates the hierarchical relationship with regard to respective sublayers in OSI model. In OSI model, respective sublayers belonging to the link device are provided between MII and MDI interface. AUTONEG is a self-negotiated sublayer used to perform a self-negotiation for different link transmission speeds and duplex modes. The switching apparatus which is capable of selecting media is essential to implement the invention.

The switching apparatus of the invention applies to the fields of the wideband computer network and data communication. It provides the network users with convenience to select the type of the network physical media according to their own requirements and conditions. Further, it allows the user to upgrade the network bandwidth and medium type smoothly, and ensures the reliability and security of important links in the network. In addition, the network infrastructure investment may be efficiently utilized with the use of the invention.

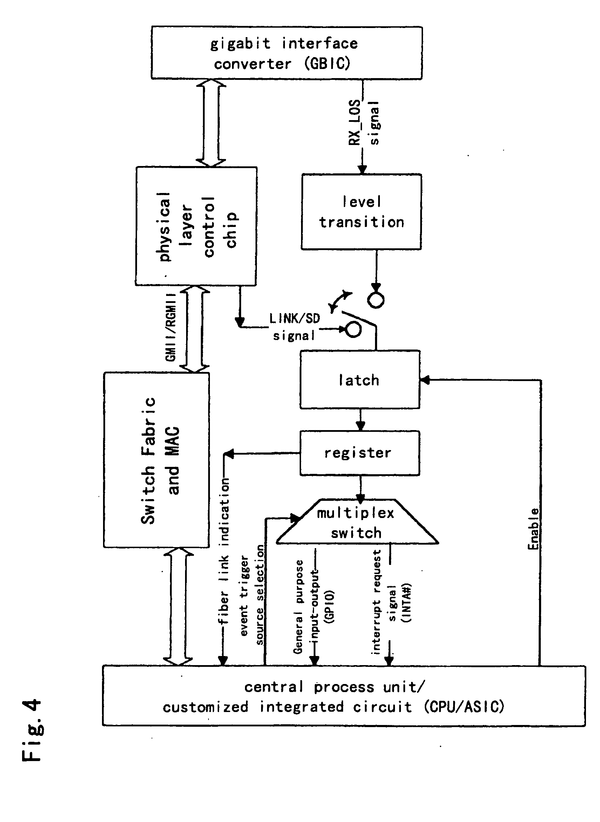

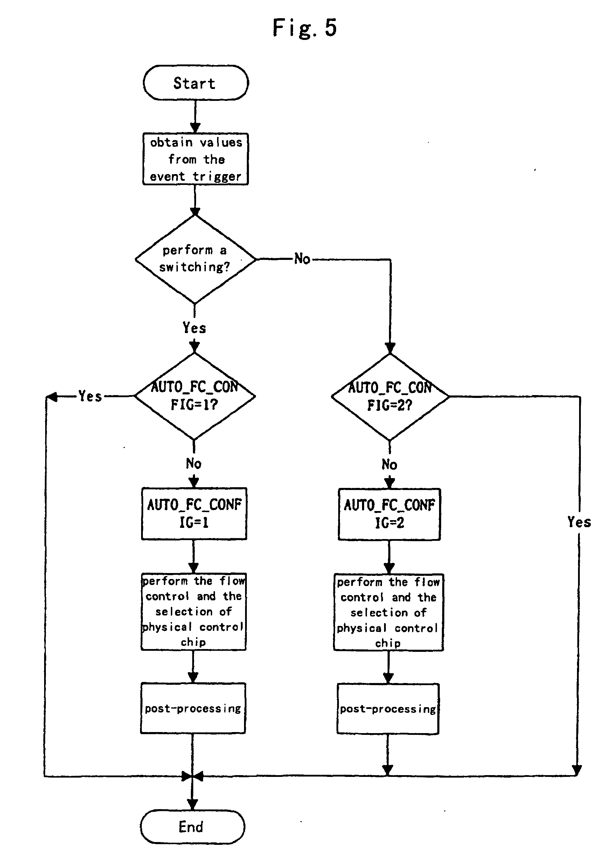

Figure 4 shows a detection and control device for detecting the link status according to the present invention. Figure 5 is flow chart explaining the process of switching media for difference network. After receiving an activating event, the detection and control device detects current link status. If it is necessary to switch from a type of medium to another, corresponding operations are performed on the link switching device and the MAC to implement a real-time smooth switching.

In the invention, it includes a detection means (not shown in figures) for transferring information on switching interface to a link management control device which is constituted of the latch, the register, the level converter, and the multiplex switch and the related connection control signals. Specifically, the link status information is obtained from the gigabit interface converter and/or physical medium dependent module, and then transferred to the link management control device. The link management control device separately or jointly uses the link status information obtained from the gigabit interface converter and/or physical medium dependent module. The link management control means is an upper-layer management controller for controlling the switching device to make a smoothly automatic switching based on the link status. In the process of the automatic switching, it includes the selection of medium, the control of link and/or the control of the internal timing operation.

As shown in FIG. 4, GBIC outputs a RX_LOS open collector signal. When it could not detect the received signal, the RX_LOS signal is valid. The RX_LOS signal is output to a level transition unit and then supplied to a latch by the selection of a switch. The output of the latch connects to register. The link status is read from the output of the register. The read out link status is outputted to a multiplex switch. The multiplex switch determine whether a general purpose input-output (GPIO) signal or a interrupt request signal INTA#(Interrupt Acknowledge) is outputted to the CPU. The LINK/SD signal of the chip in the link device or a logic combination of both can be used as an input signal for link status detection.

The medium selection and link control is implemented by providing the register corresponding to the fiber and the copper twisted wire in the switching apparatus as the switching switches for the fiber and the copper twisted wire respectively.

In order to guarantee the adjustment for different transmission rates of media, according to the invention, one of the approaches can be employed as follows: 1) setting the port flow register in medium access control module; 2) directly sending pause frame to corresponding port connected therewith; and 3) setting the port register in the switch and detect device. In this way, the data is stored in the set register, or the transmission of the data is interrupted or delayed at the interface, the loss of the data flow is therefore reduced. Specifically, as shown in FIG. 5, AUTO_FC_CONFIG is a global static variable defined in the system software. The value of this variable is a constant if the hardware status is not changed when the program monitors the hardware status in real time. In this case, the program does not carry out any processing to save the system resources. The initial value of AUTO_FC_CONFIG is set to 0. It is automatically set to 1 if the transmission medium is copper twisted wire, and set to 2 if the medium is optical fiber.

Data loss can be reduced by controlling data flow. If a user switch the transmission medium from a gigabit fiber to a hundred megabit copper line at the time when a large amount of data is transmitted, a large amount of data will be lost unless the flow is controlled. Therefore, it is very important to control the data flow during the switching. There are various methods for controlling data flow. Various methods can be employed based on the configuration of switch chip and switching apparatus. The combination of various methods may also be used. First, for example, the flow control registers (FLOW_CTL) in MAC is set to control the data flow of the corresponding port. Then, the CPU detects which ports are exchanging data with the port to be switched, and then a PAUSE frame is sent to the connected ports to make the port to be switched to stop the transmission of data. Also, it may set the flow control registers in some switching devices to control the data flow in 802.3X by using software, or assign the registers corresponding to ports with larger capacity, and so on.

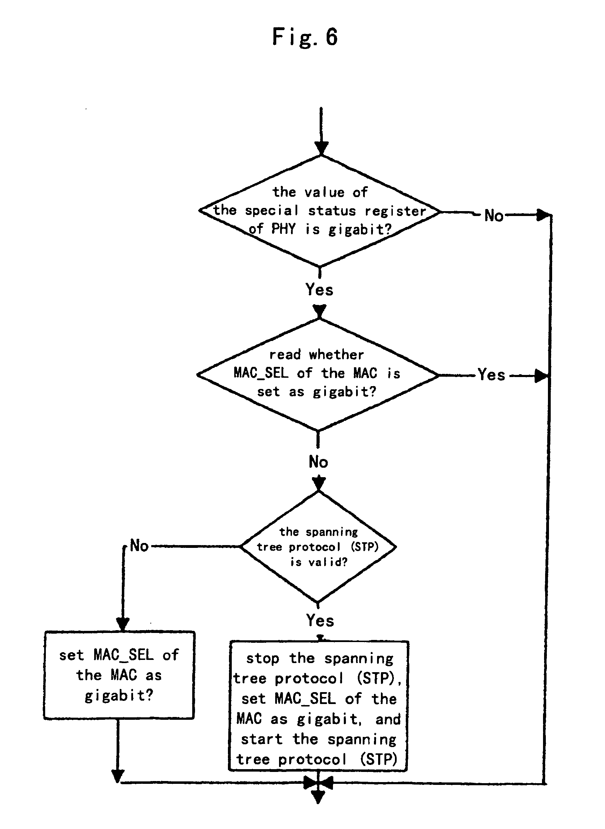

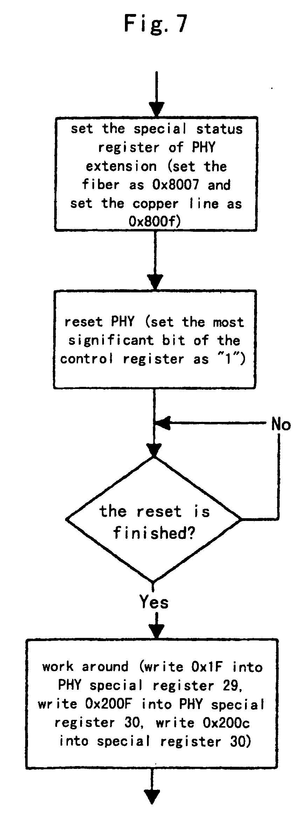

Figures 6 and 7 show the flow charts of the medium selection and link control. Post-process includes the process associated with the MAC and system resource to facilitate the sequent tasks. Its process is implemented dependent upon the specific chips used in a switch, the flow is as shown in figure 7.

By utilizing the invention, a full automatic self-switch can be achieved between the fiber and the copper twisted wire, whereby a series of valuable application can be obtained. For example, a high-speed redundancy link between the optical fiber and the copper twisted wire can be realized to obtain high reliability. The network bandwidth and media can be upgraded without adding additional investment and update of the network devices and interface cards. The network connection can be switched flexibly without changing the jumper arrangement of the device or wiring room and the likes. Prior to the occurrence of the invention, it is very difficult and inconvenient to implement these applications.

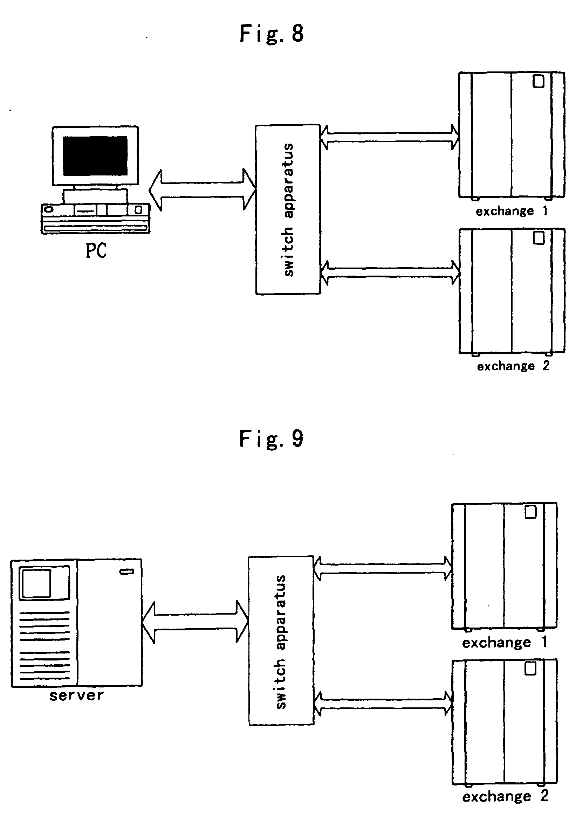

Figures 8 and 9 illustrate examples of applications according to the invention. As shown in figure 8, the device of the invention is provided between a PC and the exchanges 1 and 2. The common interface of the switch device connects to the PC, and the interfaces for different media connect to the exchanges. In order to control important network links, as shown in FIG. 9, the switch device of the invention may be provided between a server and the exchanges 1 and 2. A high-speed redundancy link between the server and the exchanges can be realized in real-time. When one of the links occurs failure, the link can be switched in real-time, which is transparent to the users and high-level software. Further, the switching apparatus of the present invention can be provided between the switches and a router. When one of the links occurs failure, the link can be switched smoothly in real-time, which is transparent to the users and high-level software. So-call smooth switch means that it is not necessary to make any change to the hardware and software configuration of the system during the process of the switch, which is a very valuable property for the network maintenance. In the case where the network has two types of media before the switching, even no any additional infrastructure investment is necessary. Instead of performing the switching by the apparatus, the switching process can also be performed manually by means of command or menu operations. The real time switch is carried out commonly by the system hardware and software in bottom layer. Because of the mechanism of controlling port registers and flow, the loss of the data can be reduced in switching process. Certainly, other applications can be derived based on such connection configuration. For example, a small enterprise may has a switch with small capacity, which the invention is applied to, and then establish an inexpensive network connection to access metropolitan area network (MAN) with, for example, a 10M copper line interface. It is possible to expand to 100M or 1000M copper line as the development of the enterprise. If the enterprise establishes new branches, and the existing connection can not meet the requirements on the transmission distance, it is possible to switch to 1000M single mode or multiple mode fiber connection on the same switch smoothly without adding any investment to the network device and changing the hardware and software configuration of the network device. It is only necessary to connect optical fiber to the exchange according to the invention, even no need to remove the original RJ 45 copper cable from the switch to enable the optical fiber operation. This is one of the optimal selections to reduce cost and time.

Also, users may manually switch the network links to which the switch apparatus of the invention is applied by means of command or menu operation without jumping operation. Therefore, it can avoid the possibility of network failure due to error operation and improve the management to network. These characteristics are very useful to improve the reliability of the network.

The exchange in which built the switch apparatus of the invention is connected to two devices. The operator can select one of the devices to establish the connection and switch to the other device at any time. All the operation can be performed on the control interface only by means of the command or menu.

The above described embodiments only explain the invention but not limit the invention. Although the present invention has been described by way of exemplary embodiments, it should be understood that many changes and substitutions may further be made by those skilled in the art without departing from the scope of the present invention which is defined by the appended claims.

## Claims

1. An apparatus for adaptively switching different network transmission link media on physical layer comprising:
at least one common interface for connecting a medium access control (MAC) module interface;
one or more different transmission medium interface; and
a switch and control means having a switching means, an instruction and a channel control means, which servers as a part of a physical coding sub-layer, for controlling an automatic switching among different transmission media.

2. The apparatus according to claim 1, wherein said switching means is one of a register, a trigger, a transistor and a NAND gate.

3. The apparatus according to claim 1, wherein said switch and control means comprises:
a multiplex switch for switching different transmission media;
a register for performing preset status control instructions;
a first-in first-out (FIFO) synchronizing means;
a plurality of encoders for coding symbols based on different transmission protocol;
a plurality of decoders for decoding symbols based on different transmission protocol;
a plurality of code stream serialization means for converting parallel symbols into serial symbols;
a plurality of code stream parallelization means for converting serial symbols into parallel symbols;
a plurality of channel encoders for encoding signals into a signal format which is appropriated to transmit through respective media;
a plurality of channel decoders for decoding signals received from transmission media; and
a plurality of transmission means corresponding to respective media.

4. The apparatus according to claim 3, wherein said switch and control means further comprises a management interface for managing the operation of said multiplex switch and said FIFO means.

5. The apparatus according to claim 1, wherein said common interface is one of standard gigabit medium independent interface (GMII), reduced standard gigabit medium independent interface (RGMII), standard reduced medium independent interface (RMII), standard serial medium independent interface (SMII) and standard source synchronizing serial medium independent interface (S3MII).

6. The apparatus according to claim 1, wherein said different transmission media include at least one of the copper twisted wire and the optical fiber.

7. The apparatus according to claim 5, wherein said copper twisted wire is one of 10BASE-T copper twisted wire, 100BASE-T copper twisted wire and 1000BASE-T copper twisted wire.

8. The apparatus according to claim 1 or 5, wherein the optical fiber medium transmission path is externally connected with a gigabit interface converter (GBIC) for performing the functions of level driving, photoelectric conversion of signals, echo suppression, cross-talk suppression and signal equalization.

9. The apparatus according to claim 1, further comprising
a detection control means connecting to the interface of said switch and control means for detecting status information of the interface, switching the transmission media and controlling the data flow based on the detected information.

10. The apparatus according to claim 9, wherein said detection control means functions as a upper layer management controller, which comprises a level converter, a latch, a register and a CPU, and is used to control different media to be switched smoothly, the output of the CPU controls the management interface of said switch and control means.

11. The apparatus according to claim 9, wherein a multiplex switch is connected between said detection control means and the register to select event triggering sources so as to determine an event triggering mode for the medium switching.

12. The apparatus according to any one of claims 9-11, wherein said detection control means obtains link status information from said gigabit interface converter, and transmits the information to the CPU via the level converter, the latch and the register.

13. The apparatus according to claim 12, wherein said detection control means obtains link status information from a physical medium transmitting module, and then transmits the information to the CPU via the latch and the register.

14. The apparatus according to any one of claims 9-11, wherein said detection control means obtains link status information from a physical medium transmitting module, and then transmits the information to the CPU via the latch and the register.

15. A system having the apparatus for adaptively switching different network transmission link media on physical layer according to any one of the previous claims, and network devices;
wherein said apparatus is separately provided, or jointly provided in said network devices.

16. The system according to claim 15, wherein said network device includes at least one of a PC, a server, exchanges, a router and a work station.

17. The system according to claim 15 or 16, wherein said network device includes a PC and at least one exchange, wherein said apparatus is provided between the PC and the at least one exchange, wherein a common interface of said apparatus is connected to the PC, and the interface for different media is connected to the at least one exchange.

18. The system according to claim 15 or 16, wherein said network device includes different exchanges, and said apparatus is provided between the different exchanges.

19. The system according to claim 15 or 16, wherein said network device includes a server and a exchange, and said apparatus is provided between the server and the exchange, wherein a common interface of said apparatus is connected to the server, and the interface for different media is connected to the exchange.

20. The system according to claim 15 or 16, wherein said network device includes a exchange and a router, and said apparatus is provided between the exchange and the router.

21. The system according to claim 15 or 16, wherein said network device includes a exchange and a network interface card (NIC), and said apparatus is provided between the exchange and the network interface card.

22. The system according to claim 15 or 16, wherein said network device includes a router and a network interface card, and said apparatus is provided between the router and the network interface card.

23. The system according to claim 15 or 16, wherein said network device includes an server and a work station network interface card, and said apparatus is provided between the server and the work station network interface card.

24. The system according to claim 15 or 16, wherein said network device includes work station network interface cards, and said apparatus is provided between said work station network interface cards.

25. A method of controlling the apparatus for adaptively switching different network transmission link media on physical layer, comprising the steps of:
a CPU provided in the detection control means according to previous claims detects the data status of different transmission medium link;
if a switching is needed, the CPU notifies a switch and control means to select the transmission medium and control the data flow based on the detected data status information.

26. The method according to claim 25, wherein said step of selecting comprising the step of respectively setting a internal control and status register and/or MII management register corresponding to the optical fiber and physical medium interface in the switch and control means to switch an optical fiber and a copper twisted wire.

27. The method according to claim 25, wherein said step of control the data flow comprises the step of setting the port flow register in the medium access control module to store the data, which could not be transmitted in the process of switching the paths, into the set said port flow register.

28. The method according to claim 25 or 27, wherein said step of controlling date flow comprises the step of setting the port register in said switch and control means to store the data, which could not be transmitted in the process of switching the paths, into the set said port register.

29. The method according to claim 25 or 27, wherein said step of controlling date flow comprises the step of directly transmitting a pause frame to a upper level port connected thereto to request the interface to stop or delay the transmission of the data to reduce the loss of the data.

30. The method according to claim 25 or 27, wherein said step of controlling date flow comprises the step of directly transmitting a pause frame to a upper level port connected thereto to request the interface to stop or delay the transmission of the data to reduce the loss of the data.

31. The method according to claim 25 or 27, wherein said step of controlling date flow comprises the step of operating internal timing of the register to allow the data in the register to be transmitted as requirements.

32. The method according to claim 28, wherein said step of controlling date flow comprises the step of operating internal timing of the register to allow the data in the register to be transmitted as requirements.
